# EUROPEAN PATENT APPLICATION

(11) **EP 1 603 048 A1**
(43) Date of publication of application: **07.12.2005**
(21) Application number: 04709728.2
(22) Date of filing: 10.02.2004
(51) Int. Cl.: G06F 13/10, G06F 13/38, G06F 13/14, G06F 9/06, G06F 1/00, G06F 3/00

(54) **DEVICE MANAGEMENT METHOD AND DEVICE MANAGEMENT SYSTEM**

(30) Priority: 07.03.2003 JP 2003060889
(71) Applicant: SONY CORPORATION, Tokyo 141-0001 (JP)
(72) Inventor: SATO, Hideki C/O Sony Corporation, Shinagawa-ku Tokyo 1410001 (JP); OGIHARA, Yuuji C/O Sony Corporation, 1410001 (JP)
(74) Representative: Smith, Samuel Leonard
(86) International application number: PCT/JP2004/001410
(87) International publication number: WO 2004/079582

(57) **Abstract**

This invention is a method of managing a device, which performs a hot-plug function in the device (peripheral device) in a non-event-driven OS (Operating System). A hot-plug script hotplug is called by a core driver usbcore of a kernel when the device is connected or disconnected. When called, the hot-plug script hotplug performs predetermined processes described in it, and then calls a hook program hooker. When called, the hook program hooker executes a hot-plug manager pnpmanager, thereby acquiring information about the device.

## Description

### Technical Field

This invention relates to a method of managing a device and a system for managing a device, both designed to perform a hot-plug function in a device (peripheral device) by using a non-event-driven OS (Operating System).

For the present application, priority is claimed on the basis of Japanese Patent Application No. 2003-060889 filed in Japan on March 7, 2003, the entire contents of which are incorporated herein by reference.

### Background Art

Among AV (Audio and Visual) devices are those which can be used in combination with personal computers and those which can transmit and receive audio data and video data through networks. Most personal computers to be connected to such AV devices incorporate a multi-task OS.

In an event-driven OS such as Microsoft Windows (registered trademark), the user application is configured to start, on receiving a system message from the OS, a process corresponding to the message, such as activation, terminating or picture-drawing. Hence, if the OS is an event-driven one, the user application can perform necessary processes on receiving the system message from the OS, even for a hot-plug event such as USB (Universal Serial Bus) connection.

However, any non-event-driven OS, such as Linux (registered trademark), does not have such system messages as the event-driven OS does. Therefore, the user application must perform polling all the time, in order to enable the user application to catch hot-plug events. That is, the user application monitors the bus line at regular intervals as described in Jpn. Pat. Appln. Laid-Open Publication No. 2002-300176. When a hot-plug event occurs, the user application performs the process corresponding to the hot-plug event.

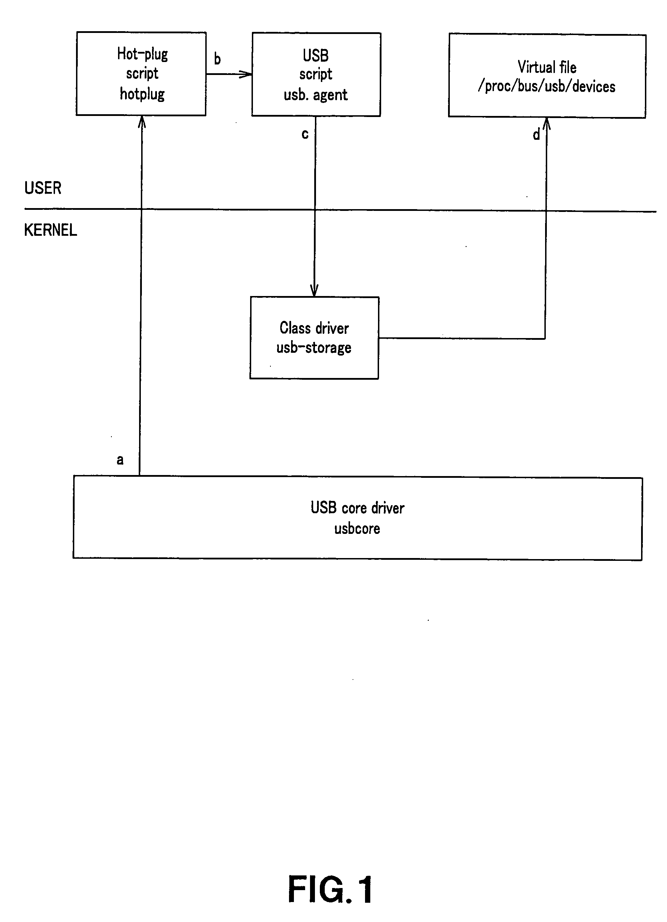

FIG. 1 illustrates how polling is carried out in order to process a hot-plug event. This case is concerned with a mass-storage device that is USB-connected to a personal computer incorporating Linux (registered trademark) of Kernel 2.4.

A USB core driver usbcore and a class driver usb-storage for USB mass-storage are provided in the kernel space KERNEL of Linux (registered trademark). In the user space USER, there are provided a hot-plug script hotplug and a USB script usb.agent. When the USB mass-storage device is connected to the personal computer, the hot-plug script hotplug is called as the USB core driver usbcore performs an extended process on a probe function probe. At this time, various environmental variables are set, whereby the hot-plug script hotplug is executed.

In this case, some of the environmental variable indicates that a USB device is connected to the personal computer.

Next, as shown at b in FIG. 1, the hot-plug script hotplug executes the script corresponding to the event that has initiated the execution of the hot-plug script. More precisely, the hot-plug script executes the USB script usb.agent in accordance with the environmental variables set in the step shown at a in FIG. 1.

The USB script usb.agent loads the class driver that has initiated the execution of the USB script. More specifically, the USB script loads the class driver usb-storage of the USB mass-storage device, as is shown at c in FIG. 1. As shown at d in FIG. 1, the USB core driver usbcore updates the content of a virtual file /proc/bus/usb/devices.

Thus, only if the user application performs polling for monitoring the virtual file /proc/bus/usb/devices, the mass-storage device can be used when it is USB-connected to the personal computer. However, the hot-plug process in the existing Linux (registered trademark) is used only when the class driver is automatically loaded.

The polling may be performed to catch a hot-plug event, as described above. In this case, the load on the system will increase if the polling time is short. If the polling time is long, there will be a time lag between the occurrence of the hot-plug event and the execution of the corresponding process.

This problem can be solved or mitigated by using a high-speed CPU. High-speed CPUs are expensive. If the system control circuit of an AV device comprises a microcomputer, the CPU used in the system control circuit accounts for the greater part of the price of the AV device. In view of this, expensive CPUs cannot be used, though they operate at high speed.

### Disclosure of the Invention

An object of this invention is to provide a method and system for managing a device, which can solve the above-mentioned problem inherent to the prior art.

Another object of the invention is to provide a novel method and system for managing a device, which can perform a hot-plug function in a device (peripheral device) by using a non-event-driven OS (Operating System).

In the present invention, a core driver of a kernel calls a hot-plug script when a device is connected or disconnected. When the hot-plug script is called by the core driver of the kernel, it performs predetermined processes described in it, and then calls a hook program.

When called, the hook program executes a hot-plug manager, thereby acquiring information about the connection/disconnection of the device.

In this invention, when a hot-plug event takes place, the hot-plug script causes the hook program to execute the hot-plug manager. The information about the hot-plug event is thereby given to a user application.

Other objects of this invention and the specific advantages of the invention will be more apparent from the following description of an embodiment, which is made with reference to the accompanying drawings.

### Brief Description of the Drawings

FIG. 1 is a block diagram showing a conventional method and system for managing a device; and
FIG. 2 is a block diagram illustrating a method and system for managing a device, both according to the present invention.

### Best Mode for Carrying out the Invention

Hereinafter, a method and system for managing a device, according to this invention, will be described with reference to the accompanying drawings.

As has been explained with reference to FIG. 1, once a USB (Universal Serial Bus) device is connected to a hot plug in the existing Linux (registered trademark), the hot-plug script hotplug is called as the core driver usbcore provided in the kernel space KERNEL performs an extended process on a probe function probe as is illustrated at a in FIG. 1, regardless of the type of the USB device connected, when the USB mass-storage device is connected to the personal computer.

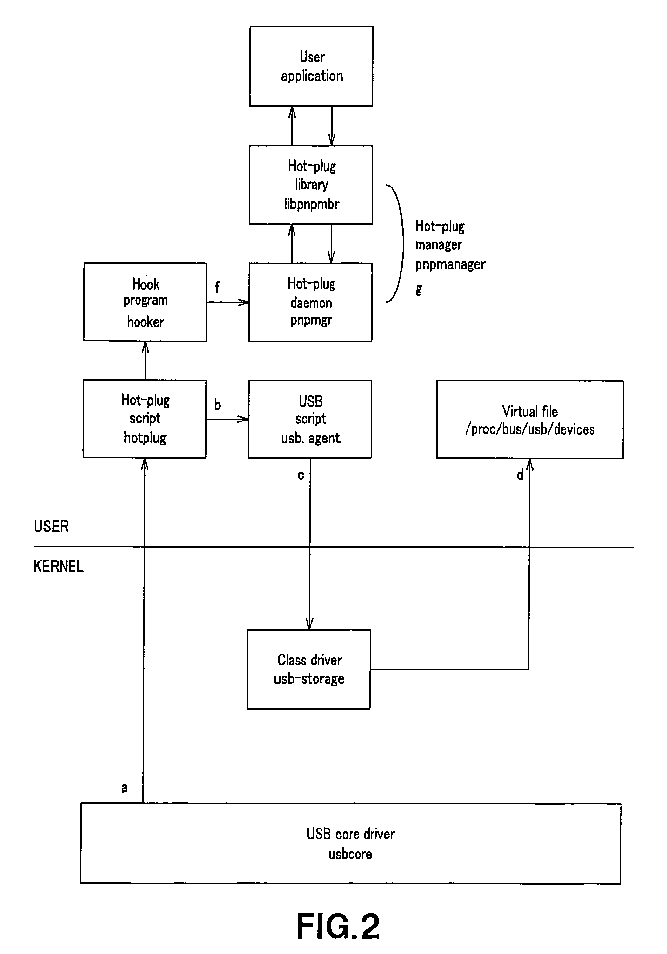

In view of this, the present invention utilizes the hot-plug script hotplug, thereby performing a hotplug process. It will be described how a hot-plug process is performed to USB-connect a mass-storage device to a personal computer that incorporates Linux (registered trademark) of Kernel 2.4, with reference to FIG. 2.

In the present invention, a USB core driver usbcore and a class driver usb-storage for USB mass-storage are provided in the kernel space KERNEL of Linux (registered trademark), and a hot-plug script hotplug and a USB script usb.agent are provided in the user space USER, as in the above-described system shown in FIG. 1.

Further, a hook program hooker, a hot-plug daemon pnpmgr and a hot-plug library libpnpmgr are provided in the user space USER. The hot-plug daemon and the hot-plug library constitute a hot-plug manager pnpmanager.

The hook program hooker is performed by the hot-plug script hotplug. The hot-plug script hotplug therefore has, at its end, an additional code that calls the hook program hooker. The hook program hooker is configured to use the message queue of the hot-plug manager pnpmanager, thereby to transfer environmental variables to the hot-plug manager.

The hot-plug daemon pnpmgr collects device information from the program hooker. If necessary, it notifies an event to the hot-plug library libpnpmgr. The hot-plug library libpnpmgr gives an API (Application Program Interface) to the user application with.

API provides a function of registering or canceling an event reservation. This function registers or cancels the function of the hot-plug daemon pnpmgr. Once the function of the hot-plug daemon has been registered, it is possible to notify an event and to acquire the device information.

API provides another function, i.e., acquisition of device information. This function acquires the information about the device now connected to the personal computer. The information thus acquired contains all data that the user application must have to access the device connected to the personal computer.

API has still another function, i.e., the function of notifying an event. This function is to give the data showing whether the hot-plug device is connected or disconnected and the data representing the type of the device, to the a call-back function callback that has been designated at the time of registration.

Inter-process communication, i.e., exchange of messages, is carried out between the hook program hooker and the hot-plug daemon pnpmgr , and between the hot-plug daemon pnpmgr and the hot-plug library libpnpmgr.

When a UBS mass-storage device is connected to a personal computer, the system performs a process similar to the process that has been explained with reference to FIG. 1.

That is, when a USB mass-storage device is connected to the personal computer, the hot-plug script hotplug is called as the USB core driver usbcore provided in the kernel space KERNEL performs an extended process on a probe function probe, as is illustrated at a in FIG. 2. At this time, various environmental variables are set, whereby the hot-plug script hotplug is executed.

Next, as shown at b in FIG. 2, the hot-plug script hotplug executes the script corresponding to the event that has initiated the execution of the hot-plug script. In this case, the hot-plug script executes the USB script usb.agent in accordance with the environmental variables set in the step shown at a in FIG. 1.

The USB script usb.agent loads the class driver that has initiated the execution of the USB script. More specifically, the USB script loads the class driver usb-storage of the USB mass-storage device, as is shown at c in FIG. 2. As shown at d in FIG. 2, the USB core driver usbcore updates the content of a virtual file /proc/bus/usb/devices.

Thus, only if the user application performs polling, monitoring the virtual file /proc/bus/usb/devices, the mass-storage device can be used when it is USB-connected to the personal computer. However, the hot-plug process in the existing Linux (registered trademark) is used only when the class driver is automatically loaded.

In the system according to the present invention, the hot-plug script hotplug calls the hook program hooker as shown at e in FIG. 2 after the above-mentioned sequence of processes is carried out. Then, as shown at f in FIG. 2, the hook program hooker sends the environmental variables of the hot-plug script hotplug, as a message, to the hot-plug daemon pnpmgr.

As shown at g in FIG. 2, the hot-plug daemon pnpmgr collects the device information about the USB-connected device, from the message sent from the hook program hooker.

If there is any user application being monitored, the hot-plug daemon pnpmgr gives a message to the hot-plug library libpnpmgr as is illustrated at h in FIG. 2.

If the user application makes any demand, the hot-plug library libpnpmgr gives the demand to the hot-plug daemon pnpmgr, as shown at i in FIG. 2.

In the present invention, the processes a to i are carried out in the order they has been mentioned.

Hence, the mass-storage device can be used once it has been USB-connected to the personal computer. When the mass-storage device is disconnected, similar processes are performed, inhibiting the use of any mass-storage device.

Thus, the system of FIG. 2, according to this invention, can perform a hot-plug function in Linux (registered trademark). In this case, hot-plug devices can be added and deleted, asynchronously from the viewpoint of the user application, and polling need not be carried out. Therefore, no time lag develops between the connection of the hot-plug device and the completion of the process. This reduces the load on the CPU and suppresses the increase of cost.

The hot-plug manager pnpmanager is composed of two sections, i.e., the hot-plug daemon pnpmgr and the hot-plug library libpnpmgr. The process communication between these sections can be concealed from the user application. The user application can therefore handle hot-plug events in the same way as it accesses the ordinary library.

Moreover, a callback function callback is registered in the hot-plug daemon pnpmgr. The user application can therefore asynchronously receive event information items or can receive the event information of only a device of interest. In addition, the kernel space KERNEL and the user space USER can be changed merely by writing only one additional line for calling the hook program hooker, at the end of the hot-plug script hotplug. Hence, the changing of these spaces does not influence the system at all.

This invention can be applied to the hot-plug events of a USB device, as described above. The invention can also be applied to other hot-plug event, such as IEEE (Institute of Electrical and Electronics Engineers) 1394, network adapters, PCMCIA (Personal Computer Memory Card International Association) cards.

The present invention is not limited to the embodiment described above with reference to the drawings. It is obvious to those skilled in the art to make various changes and use substitutes or equivalents without departing from the spirit and scope of the present invention.

### Industrial Applicability

As has been described above, the present invention can perform a hot-plug function in a non-event-driven OS such as Linux (registered trademark). There is no time lag between the occurrence of a hot-plug event and the execution of the corresponding process. Further, the load on the system can be reduced. Moreover, a high-speed CPU need not be used. This suppresses the increase in the cost of the system.

## Claims

1. A method of managing a device, in which:
a core driver of a kernel calls a hot-plug script when the device is connected or disconnected;
the hot-plug script performs predetermined processes described in the hot-plug script and then calls a hook program, when the core driver calls the hot-plug script; and
the hook program thus called performs a hot-plug manager, thereby to acquire information about the connection/disconnection of the device.

2. The method of managing a device according to claim 1, wherein, in the hot-plug manager, a hot-plug daemon receives information contained in environmental variables of the hot-plug script, when the hook program is executed, and a hot-plug library acquires the information from the hot-plug daemon and gives API to a user application.

3. The method of managing a device according to claim 1, wherein the kernel is the kernel of Linux (registered trademark).

4. A system for managing a device, comprising:
a hot-plug script that is called by a core driver of a kernel and performs predetermined processes described in it, when the device is disconnected;
a hook program that is called when the hot-plug script performs the last process; and
a hot-plug manager that is executed by the hook program and gives information about the disconnection of the device to a user application.

5. The system for managing a device according to claim 4, wherein the hot-plug manager has a hot-plug daemon which receives information contained in environmental variables of the hot-plug script, when called by the hook program, and a hot-plug library which acquires the information from the hot-plug daemon and gives API to a user application.

6. The system for managing a device according to claim 4, wherein the kernel is the kernel of Linux (registered trademark).
